# FASCICULE DE BREVET EUROPEEN

(11) **EP 4 233 334 B1**
(45) Date de publication et mention de la délivrance du brevet: **18.12.2024**
(21) Numéro de dépôt: 21811113.6
(22) Date de dépôt: 20.10.2021
(51) Int. Cl.: H04L 9/40

(54) **PROCÉDÉS ET DISPOSITIFS DE PROTECTION DE FLUX DE PAQUETS**
VERFAHREN UND VORRICHTUNGEN ZUM SCHUTZ EINES STROMS VON PAKETEN
METHODS AND DEVICES FOR PROTECTING A STREAM OF PACKETS

(30) Priorité: 22.10.2020 FR 2010856
(43) Date de publication de la demande: 30.08.2023
(73) Titulaire: Orange, 92130 Issy-les-Moulineaux (FR)
(72) Inventeur: DECRAENE, Bruno, 92326 CHÂTILLON CEDEX (FR); ATHIAS, Isabelle, 92326 CHÂTILLON CEDEX (FR)
(86) Numéro de dépôt international: PCT/FR2021/051829
(87) Numéro de publication internationale: WO 2022/084625

(56) Documents cités:
- WO-A2-2006/124009
- CN-A- 106 357 685

## Description

### 1. Domaine de l'invention

L'invention se situe dans le domaine des télécommunications, et plus particulièrement des réseaux constitués de routeurs acheminant des paquets IP.

### 2. Etat de la technique antérieure

Dans de nombreuses usages de type VPN (Virtual Private Network, ou réseau privé virtuel), et en particulier pour les offres de type SD-WAN (Software Defined Wide Area Network, ou réseau métropolitain défini par logiciel) qui gagnent en popularité de nos jours, des tunnels IPsec sont établis entre des sites du VPN d'un client, par exemple une entreprise établie sur plusieurs sites. Ces tunnels IPsec sont transportés par un réseau IP ou MPLS qui n'a pas connaissance de ces tunnels IPsec. Ce réseau "de transport" est typiquement l'Internet du fait de son ubiquité, haut débit et bas coût.

Tous les utilisateurs du réseau IP de transport peuvent également envoyer des paquets vers les sites clients. Dans le cas de l'Internet, un très grand nombre d'utilisateurs (de l'ordre du milliard) peuvent donc envoyer des paquets, potentiellement à haut débit. Un attaquant quelconque dans l'Internet peut ainsi envoyer une grande quantité de paquets sur un site client et ainsi saturer l'interface client et/ou ou le routeur client, réalisant ainsi une attaque par déni de service (DOS). Il peut également utiliser de nombreuses sources de trafic différentes toutes dirigées vers une même destination - le site client destinataire des paquets IPsec - réalisant ainsi une attaque par déni de service distribué (DDOS). De ce fait, le tunnel IPsec n'a plus de ressources et la quasi-totalité de son trafic est détruit en amont de sa destination, typiquement sur le dernier routeur du réseau de transport IP/MPLS.

Une solution connue est de déployer des équipements de protection capable d'analyser tous les flux/paquets en direction du site client, d'essayer de distinguer le trafic légitime du trafic de DDOS, et de filtrer le trafic de DDOS. Cette solution présente plusieurs inconvénients.

Cette solution repose sur de la force brute d'analyse de tous les paquets de tous les flux. Elle est donc intrinsèquement coûteuse et ne passe pas à l'échelle de la réalité. De plus, le travail nécessaire à l'analyse et la protection est beaucoup plus compliqué que le travail d'envoyer des paquets d'attaques. De ce fait, le défenseur est intrinsèquement dans une position d'infériorité par rapport à l'attaquant.

Cette solution ne peut garantir qu'elle peut/pourra distinguer les paquets ou les flux légitimes par rapport aux paquets ou flux d'attaques. Elle se base sur des heuristiques suite aux attaques précédentes ou sur le fait que l'attaquant a des chances d'envoyer des paquets/flux relativement semblables afin de se simplifier la vie, d'optimiser le travail des équipements attaquant et/ou utilise des équipements qu'il ne contrôle pas entièrement (attaques par réflexion). Mais un attaquant suffisamment motivé avec suffisamment de ressources (payées ou volées) a toutes les chances d'échapper à la détection.

Enfin, cette solution doit être dimensionnée pour la plus grosse attaque possible, même si celle-ci n'est subie qu'une seule fois par an. Ce coût maximum est difficile à amortir sur l'ensemble des attaques plus petites. Mais si l'opérateur ne fait pas cet investissement, d'une part le client ne peut plus avoir confiance dans l'offre et d'autre part l'attaquant connait le point faible.

WO 2006/124009 A2 (CISCO TECH INC [US]) 23 novembre 2006, décrit un système et un procédé permettant d'identifier et de supprimer automatiquement des paquets de données malveillants, tels que des paquets de déni de service, DoS, dans un noeud de réseau intermédiaire avant que les paquets puissent être transmis à un noeud.

CN 106 357 685 A (NSFOCUS INFORMATION TECH CO) 25 janvier 2017, décrit un procédé de défense contre les attaques par déni de service distribué, DDoS, dans un centre de services de sécurité. Le procédé consiste à mettre à jour une stratégie de protection, à transmettre la stratégie de protection à un dispositif nettoyant un flux de données, et à effectuer une protection distribuée contre les attaques DDoS.

Un des buts de l'invention est de remédier à ces inconvénients de l'état de la technique.

### 3. Exposé de l'invention

L'invention vient améliorer la situation à l'aide d'un procédé de protection d'un flux de paquets dans un réseau composé de noeuds routeurs de paquets, et de noeuds émetteur et récepteur du flux, le noeud récepteur étant connecté à un noeud routeur traitant le routage d'un paquet à destination du noeud récepteur en fonction d'une valeur attendue d'un paramètre de protection compris dans au moins un champ d'un paquet du flux, le procédé étant mis en oeuvre par un dispositif associé au noeud récepteur et comprenant :
- l'émission d'un message comprenant la valeur attendue du paramètre de protection, à destination du noeud routeur connecté au noeud récepteur.

Dans un réseau classique, les routeurs sont gérés par un opérateur qui n'a pas la connaissance de la légitimité des flux traversant les routeurs, car ces flux sont établis par des entités tierces. Une entité tierce est par exemple une entreprise gérant des noeuds émetteurs et récepteurs de flux de paquets entre des sites ou des machines de l'entreprise, ces noeuds émetteurs et récepteurs étant collectivement appelés noeuds clients. Cette entreprise est cliente de l'opérateur des noeuds routeurs, et/ou d'un fournisseur dit OTT (Over The Top), c'est à dire un fournisseur utilisant à des fins commerciales les ressources et les capacités de ces mêmes routeurs qui toutefois restent gérés par leur opérateur.

Grâce à l'invention, les flux véhiculés sont protégés par les routeurs, alors que ces flux ne sont pas nécessairement gérés (c'est-à-dire générés, émis ou reçus) par l'opérateur des routeurs. Le message comprenant la valeur du paramètre de protection peut être un message envoyé directement ou indirectement, depuis un équipement de gestion de flux vers un noeud routeur. Cet équipement de gestion de flux est associé au noeud récepteur d'un flux, c'est-à-dire qu'il peut être compris dans un noeud client, c'est-à-dire dans le noeud émetteur ou dans le noeud récepteur, ou dans une autre entité comme par exemple un équipement de supervision ou de contrôle ou de configuration des noeuds clients. Ce peut être par exemple un noeud contrôleur de réseau SD-WAN. Le traitement des paquets effectué par le routeur est fonction du paramètre de protection reçu dans le message. Par exemple, si un paquet reçu par le routeur ne présente pas la valeur attendue du paramètre dans un champ déterminé et associé au flux, il est traité selon une politique déterminée à l'avance, c'est-à-dire par exemple qu'il est détruit sans être transmis par le routeur, ou qu'il est affecté d'une priorité (QoS) plus faible, ou qu'il est retardé, etc. Cela n'exclut pas que si au contraire le paquet présente la valeur attendue du paramètre de protection, un autre aspect de la politique mentionnée plus haut puisse favoriser le flux auquel appartient le paquet, par exemple en en augmentant la priorité. On comprend que seuls les flux spécifiés ou attendus par les noeuds clients sont routés jusqu'à un noeud client par un noeud routeur, sans être modifiés défavorablement (la modification pouvant aller jusqu'à la destruction de tous les paquets du flux). Cette modification défavorable d'un flux est désignée par le terme de "filtrage" dans la suite. Même si les paquets reçus par le noeud routeur indiquent l'adresse de destination du noeud client, ils ne sont donc pas routés vers lui normalement ou selon le traitement par défaut si ces paquets ne présentent pas aussi la valeur attendue du paramètre de protection, dans le ou les champs attendus. Ainsi, une attaque par DOS ou DDOS vers le noeud client devient impossible.

Selon un aspect du procédé de protection d'un flux de paquets, l'émission du message comprenant la valeur attendue du paramètre de protection est déclenchée par l'obtention d'une information indicative d'une congestion entre le noeud émetteur et le noeud récepteur.

Grâce à cet aspect, l'effet d'une attaque peut être neutralisé même après qu'elle ait commencé. En effet, un des premiers effets d'une attaque est l'augmentation du volume des données à destination du noeud récepteur. Cette augmentation peut être détectée à plusieurs niveaux, par exemple au niveau du noeud émetteur qui n'arrive plus à communiquer correctement avec le noeud récepteur, au niveau d'un noeud routeur sur lequel arrive en transit un volume excessif de données à destination du noeud récepteur, ou au niveau du noeud récepteur lui-même qui reçoit un volume excessif de données. Si la congestion n'est pas détectée au niveau du dispositif émettant le message du paramètre de protection, l'information indicative d'une congestion lui est transmise. Dans ce mode, le procédé selon l'invention représente une solution en réaction à une attaque. On comprend également que la valeur du paramètre peut être changée aussi fréquemment que nécessaire, entre autre si l'attaquant découvre la bonne valeur du paramètre de protection.

Selon un aspect du procédé de protection d'un flux de paquets, un nouveau message est réémis avec une nouvelle valeur du paramètre de protection, après expiration d'une période définie.

Grâce à cet aspect, même si un attaquant découvre la valeur courante du paramètre de protection, elle aura changé même en cas d'attaque au niveau du noeud récepteur, à la condition que cette attaque n'empêche pas la réémission du message. Dans ce mode, le procédé selon l'invention représente une solution en prévention d'une attaque.

Selon un aspect du procédé de protection d'un flux de paquets, le message comprend plusieurs valeurs attendues du paramètre de protection, chaque valeur correspondant à une période différente d'utilisation.

Grâce à cet aspect, même si un attaquant découvre la valeur courante du paramètre de protection, elle est remplacée par une autre valeur fournie à l'avance.

Dans un mode, cela peut être fait de façon planifiée et synchronisée avec l'émetteur du flux, au moyen d'un changement automatique de la valeur du paramètre de protection au bout d'une période déterminée à l'avance, sans qu'il soit nécessaire de réémettre le message. Ceci est particulièrement avantageux si une attaque en cours rend impossible l'émission d'un nouveau message. Dans ce mode, le procédé selon l'invention représente une solution à la fois en réaction à, et en prévention d'une attaque.

Dans un autre mode, cela peut aussi être fait en réaction à une attaque, sans qu'il soit nécessaire de réémettre un nouveau message, au moyen d'un changement de la valeur du paramètre de protection qui est par exemple déclenché par l'obtention d'une information indicative d'une congestion entre le noeud émetteur et le noeud récepteur. Dans ce mode le noeud routeur doit également émettre un message pour informer le noeud émetteur du flux à partir de quel moment la valeur du paramètre de protection a changé.

L'invention vient de plus améliorer la situation à l'aide d'un procédé de filtrage d'un flux de paquets dans un réseau composé de noeuds routeurs de paquets, et de noeuds émetteur et récepteur du flux, le noeud récepteur étant connecté à un noeud routeur traitant le routage d'un paquet à destination du noeud récepteur en fonction d'une valeur attendue d'un paramètre de protection compris dans au moins un champ d'un paquet du flux, le procédé étant mis en oeuvre par le noeud routeur connecté au noeud récepteur et comprenant :
- la réception d'un message comprenant la valeur attendue du paramètre de protection, en provenance d'un dispositif associé au noeud récepteur,
- le filtrage des paquets ne comprenant pas la valeur attendue du paramètre de protection.

On comprend que grâce à ce procédé les flux spécifiés ou attendus par les noeuds clients sont aussi attendus par le noeud récepteur connecté au noeud récepteur. Si ces flux arrivent jusqu'à ce noeud routeur tout en étant destinés au noeud récepteur client, ils sont routés jusqu'au noeud récepteur client sans être filtrés uniquement si les paquets de tels flux présentent la valeur attendue du paramètre de protection.

Ainsi, une attaque par DOS ou DDOS vers un noeud client devient impossible.

Le dispositif à l'initiative du message comprenant la valeur du paramètre de protection fait partie du même domaine administratif que le noeud récepteur client, ce domaine étant par exemple celui du réseau client. Le noeud routeur effectuant le filtrage, connecté au noeud récepteur, peut recevoir ce message directement du réseau client. Dans un autre mode de réalisation, il peut aussi le recevoir indirectement, si par exemple un équipement intermédiaire doit en modifier le format et/ou s'il n'est pas possible pour le noeud routeur de recevoir une signalisation directement du réseau client. Cet équipement intermédiaire peut être un contrôleur de flux faisant partie du réseau opérateur comprenant les noeuds routeurs, et ne comprenant pas les noeuds émetteur et récepteur, auquel le dispositif associé au noeud récepteur peut envoyer des signalisations.

Selon un aspect du procédé de filtrage d'un flux de paquets, le filtrage comprend un blocage des paquets, ou une destruction des paquets, ou un abaissement de la priorité des paquets.

Grâce à cet aspect, selon une politique appliquée par l'opérateur et décidée en concertation ou non avec le client, lorsqu'un paquet ne présente pas la bonne valeur du paramètre de protection, soit la priorité du paquet est abaissée, ce qui ralentit l'arrivée des paquets du flux sur le noeud client récepteur en lui permettant de continuer à recevoir d'autres flux, soit tous les paquets du flux sont bloqués, ou détruits sans être transmis, ce qui préserve complètement le noeud client récepteur de toute nuisance que ce flux lui causerait.

Selon un aspect du procédé de filtrage d'un flux de paquets, il comprend en outre l'émission du message comprenant la valeur attendue du paramètre de protection, vers un noeud routeur voisin du noeud routeur connecté au noeud récepteur.

Grâce à cet aspect, le filtrage des flux est rendu possible au niveau d'un noeud voisin du noeud routeur connecté au noeud client, de préférence en amont du flux. Cela est avantageux dans le cas d'une attaque DDoS, où les flux attaquant arrivent sur le dernier noeud routeur en provenance de plusieurs noeuds routeurs immédiatement voisins. La charge de filtrer les flux est ainsi mieux répartie dans le réseau de routeurs. L'émission du message, qui est équivalent à l'émission d'une commande de filtrage, peut n'être déclenchée que sur atteinte d'un seuil, par exemple lorsque le volume de données reçues par le noeud routeur ou sur son interface amont atteint un seuil au-delà duquel le fonctionnement du noeud routeur ou de son interface amont est mis en danger.

Selon un aspect du procédé de protection et du procédé de filtrage d'un flux de paquets, le paramètre de protection est inclus dans l'adresse IPv6 de destination des paquets du flux.

Grâce à cet aspect, une particularité existante des adresses en IPv6 est exploitée avantageusement. En effet les derniers bits d'une adresse IPv6, par exemple les 64 derniers bits, peuvent être déterminés et modifiés à volonté par l'utilisateur du flux, par exemple le client utilisateur des noeuds émetteur et récepteur, client du réseau opérateur formé par les noeuds routeurs, sans impacter le routage des paquets vers leur destination finale. Ces 64 bits représentent un très grand nombre de valeurs possibles pour le paramètre de protection, ce qui rend leur découverte par un attaquant difficile voire impossible.

Selon un aspect du procédé de protection et du procédé de filtrage d'un flux de paquets, le flux est un tunnel IPsec ou un tunnel IP.

Grâce à cet aspect, la solution de protection couvre les flux les plus courants et les plus importants car typiquement à destinations de plusieurs destinataires. De plus, certains paramètres existants spécifiques de ces tunnels peuvent avantageusement être utilisés en tant que paramètre de protection selon l'invention. Des exemples de tunnel IP sont L2TP, GRE, UDP, SRv6 (Segment Routing IPv6).

Selon un aspect du procédé de protection et du procédé de filtrage d'un flux de paquets, l'au moins un champ comprenant le paramètre de protection est un ou plusieurs des champs d'une liste comprenant:
- "Security Parameters Index" (SPI) de IPsec,
- "Protocol" de IPv4,
- "Next Header" de IPv6,
- "Flow Label" de IPv6,
- adresse IP source, ou adresse IP destination, ou port source, ou port destination, de IPv4 ou IPv6,
- "Key" de GRE,
- Segment List, ou Segment List [n], ou Tag, ou HMAC TLV de Segment Routing IPv6 (SRv6).

Grâce à cet aspect, le flux reçu transitant par le noeud routeur peut être traité en fonction de plusieurs paramètres de protection, ce qui représente une combinaison plus difficile à découvrir par un attaquant, tout en fournissant plus de flexibilité à l'émetteur/récepteur du flux pour adapter la solution à ses cas d'usage. L'utilisation d'un paramètre spécifique à un contexte (tel que SPI, spécifique à IPsec) donne également une meilleure protection qu'un paramètre présent dans tous les paquets, quel que soit le contexte (tel que l'adresse IP ou le port), car il faut que l'attaquant découvre aussi le contexte (tel que le type de tunnel qu'utilise le flux).

Selon un aspect du procédé de protection et du procédé de filtrage d'un flux de paquets, le message comprenant la valeur attendue du paramètre de protection est un message d'un des protocoles suivants:
- BGP Flow Spec,
- NETCONF,
- RESTCONF,
- En ligne de commande (CLI: Command Line Interface),
- SNMP,
- API REST,
- API.

Grâce à cet aspect, le procédé selon l'invention s'insère dans une architecture réseau existante en réutilisant un protocole de communication déjà utilisé par des noeuds routeurs.

L'invention concerne aussi un dispositif de protection d'un flux de paquets dans un réseau composé de noeuds routeurs de paquets, et de noeuds émetteur et récepteur du flux, le noeud récepteur étant connecté à un noeud routeur traitant le routage d'un paquet à destination du noeud récepteur en fonction d'une valeur attendue d'un paramètre de protection compris dans au moins un champ d'un paquet du flux, le dispositif étant associé au noeud récepteur et comprenant un récepteur, un émetteur, un processeur et une mémoire couplée au processeur avec des instructions destinées à être exécutées par le processeur pour :
- l'émission d'un message comprenant la valeur attendue du paramètre de protection, à destination du noeud routeur connecté au noeud récepteur.

Ce dispositif, apte à mettre en oeuvre dans tous ses modes de réalisation le procédé de protection de flux qui vient d'être décrit, est destiné à être mis en oeuvre dans un équipement du sous-réseau composés des noeuds émetteur et récepteur du flux, aussi appelé réseau client. Il peut faire partie du noeud récepteur ou du noeud émetteur, ou faire partie d'un équipement de gestion du réseau client, distinct des noeuds émetteur ou récepteur du flux, par exemple un noeud contrôleur SD-WAN si le réseau client est de type SD-WAN. Dans tous les cas ce dispositif est associé au noeud récepteur, c'est-à-fait partie du même domaine administratif.

L'invention concerne aussi un dispositif de filtrage d'un flux de paquets dans un réseau composé de noeuds routeurs de paquets, et de noeuds émetteur et récepteur du flux, le noeud récepteur étant connecté à un noeud routeur traitant le routage d'un paquet à destination du noeud récepteur en fonction d'une valeur attendue d'un paramètre de protection compris dans au moins un champ d'un paquet du flux, le dispositif étant mis en oeuvre dans le noeud routeur connecté au noeud récepteur et comprenant un récepteur, un émetteur, un processeur et une mémoire couplée au processeur avec des instructions destinées à être exécutées par le processeur pour :
- la réception d'un message comprenant la valeur attendue du paramètre de protection, en provenance d'un dispositif associé au noeud récepteur,
- le filtrage des paquets ne comprenant pas la valeur attendue du paramètre de protection.

Ce dispositif, apte à mettre en oeuvre dans tous ses modes de réalisation le procédé de filtrage de flux qui vient d'être décrit, est destiné à être mis en oeuvre dans un noeud du sous-réseau composé des noeuds routeurs, aussi appelé réseau opérateur. Plus précisément ce dispositif fait partie du noeud routeur connecté au noeud récepteur du réseau client.

L'invention concerne aussi un programme d'ordinateur comprenant des instructions qui, lorsque ces instructions sont exécutées par un processeur, conduisent celui-ci à mettre en oeuvre les étapes du procédé de protection, qui vient d'être décrit.

L'invention concerne aussi un programme d'ordinateur comprenant des instructions qui, lorsque ces instructions sont exécutées par un processeur, conduisent celui-ci à mettre en oeuvre les étapes du procédé de filtrage, qui vient d'être décrit.

L'invention vise aussi un support d'informations lisible par un dispositif de protection, et comportant des instructions d'un programme d'ordinateur tel que mentionné ci-dessus. L'invention vise aussi un support d'informations lisible par un dispositif de filtrage, et comportant des instructions d'un programme d'ordinateur tel que mentionné ci-dessus.

Les programmes mentionnés ci-dessus peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations mentionnés ci-dessus peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
[Fig 1] la figure 1 représente, de façon schématique, un réseau comprenant des noeuds routeurs et des noeuds clients conformes à l'invention, dans un mode particulier de réalisation,
[Fig 2] la figure 2 présente un exemple de structure d'un dispositif de protection, mis en oeuvre côté réseau client, selon des aspects de l'invention,
[Fig 3] la figure 3 présente un exemple de structure d'un dispositif de filtrage, mis en oeuvre côté réseau de routeurs, selon des aspects de l'invention.

### 5. Description détaillée d'au moins un mode de réalisation de l'invention

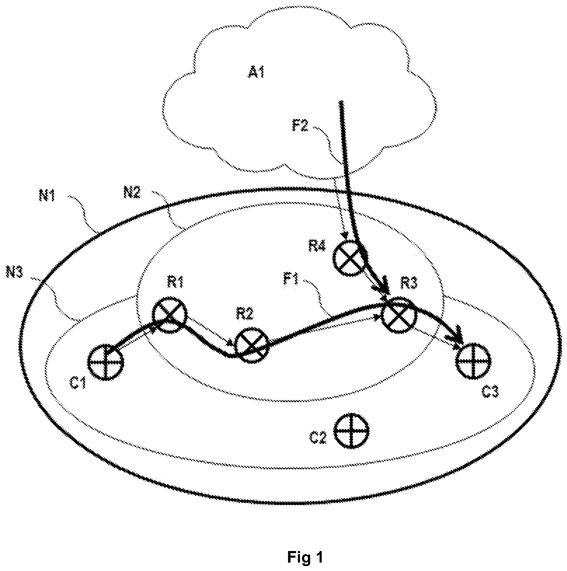

La figure 1 représente, de façon schématique, un réseau comprenant des noeuds routeurs et des noeuds clients conformes à l'invention, dans un mode particulier de réalisation.

Le réseau N1 comprend un sous-réseau N2 composé de noeuds routeurs R1 à R4 gérés par un opérateur de télécommunications, appelé réseau opérateur, et un sous-réseau N3 composé de noeuds clients C1 à C3 gérés par une entité tierce indépendante de l'opérateur, appelé réseau client. Le réseau opérateur N2 est par exemple un réseau IP/MPLS, aussi dit réseau de transport. Le réseau client N3 peut être de type VPN, SD-WAN, etc.

Dans un mode particulier de réalisation, un flux F1 est établi entre le noeud client C1 et le noeud client C3. Le noeud client C1 est connecté au noeud routeur R1, le noeud client C3 est connecté au noeud routeur R3, et le flux F1 émis par le noeud C1 à destination du noeud client C3 emprunte une route B1 commençant au noeud client C1, passant par les noeuds routeurs R1, R2 et R3, et se terminant au noeud client C3.

Le noeud client C3 peut recevoir d'autres flux en provenance d'autres sources, comme par exemple un flux F2 émis par la source A1, empruntant ou étant destiné à emprunter une route B2 ayant en commun avec la route B1 le noeud routeur R3 et le noeud client C3. La source A1 peut être tout type d'équipement apte à se connecter à un noeud routeur du réseau opérateur N2. Par simplicité la source A1 est illustrée par un nuage figurant en dehors des réseaux N2 ou N3, mais elle peut faire partie ou non du réseau opérateur N2, ou faire partie ou non du réseau client N3.

Un problème survient lorsque le flux F2 émis par la source A1 n'est pas un flux attendu par le noeud client C3 et présente un volume de données susceptible de dégrader le fonctionnement du noeud client C3. Ce problème est souvent nommé dans la littérature attaque par déni de service, ou attaque DoS (Déniai of Service, en anglais). La source A1, illustrée dans la figure 1 comme étant unique par simplicité, peut aussi être multiple, ce qui aggrave le problème. On parle alors d'attaque DoS distribuée, ou attaque DDoS (Distributed DoS, en anglais). Les multiples flux émis par la source multiple A1, autrement dit l'attaquant DDoS, peuvent emprunter des routes différentes mais ils aboutissent tous sur le noeud routeur R3 qui est le dernier noeud routeur avant le noeud attaqué qui est le noeud client C3.

Afin de repousser une telle attaque, les flux arrivant sur le noeud routeur R3 et qui ne sont pas légitimement attendus par le noeud client C3 et risquent de lui nuire, doivent être filtrés, c'est-à-dire soit bloqués, soit réduits dans leur volume ou dans leur débit, soit abaissés en terme de priorité (QoS). Abaisser la priorité des flux est particulièrement avantageux s'il est important de laisser passer certains flux légitimes mais non prévisibles venant de l'Internet, tant qu'une attaque n'est pas en cours. Dans ce but, selon l'invention, un flux doit pouvoir fournir au noeud routeur R3 un paramètre particulier avant d'être transmis par le noeud routeur R3 à sa destination qui est le noeud client C3. Ce paramètre de protection, comparable à une signature, doit être connu à l'avance par le noeud routeur R3. Il est communiqué dans une signalisation en provenance d'un dispositif du réseau client N3 à destination d'une entité du réseau de transport N2. Selon l'invention, plusieurs méthodes alternatives permettent au noeud routeur R3 d'obtenir les informations nécessaires, dont le paramètre de protection.

Le noeud routeur R3 doit pouvoir identifier le noeud client et les flux à protéger. Pour ce faire, la signalisation comprend soit l'adresse de destination des flux, qui correspond à l'adresse IP du noeud client C3, soit une autre information permettant d'identifier le noeud client C3, tel qu'un numéro de port ou d'interface, un nom de domaine (DNS), un certificat cryptographique, etc. Utiliser une adresse IPv6 est particulièrement avantageux car cette adresse est codée sur un nombre de bits suffisamment grand pour aussi y inclure le paramètre de protection. Si la signalisation est émise directement par le noeud client C3, une autre façon pour le noeud routeur R3 d'identifier le noeud client C3 est au travers de l'identifiant de l'émetteur de la signalisation, comme par exemple l'adresse IP d'origine d'un paquet de la signalisation ou l'interface d'arrivée de la signalisation.

Plusieurs protocoles de signalisation vers le noeud routeur R3 peuvent être utilisés :
- Un protocole de signalisation de flux comme BGP FlowSpec (RFC5575 et sa révision draft-ietf-idr-rfc5575bis « Dissémination of Flow Spécification Rules ») et ses extensions;
- Un protocole de configuration tel que NETCONF (RFC 6241 « Network Configuration Protocol (NETCONF) », RESTCONF (RFC 8040 « RESTCONF Protocol », CLI (Command Line Interface) ou SNMP;
- Une interface propriétaire de type APl (Application Programmation Interface).

La source de la signalisation peut être :
- Le noeud client C1 ou le noeud client C3;
- Un contrôleur de communication des flux clients (par exemple un contrôleur SD-WAN), dans le réseau N3.

La signalisation peut transiter par un contrôleur de routeurs du réseau opérateur N2, dans les cas où par exemple les routeurs du réseau N2 ne sont pas aptes à recevoir directement du réseau N3 des messages de signalisation. Ce contrôleur agit alors comme équipement intermédiaire qui adapte le protocole ou le format du message de signalisation avant de le réémettre vers un routeur.

Dans un mode de réalisation, le noeud client C1 envoie son flux avec le paramètre de protection de son choix (ou du choix du noeud client C3). Le noeud routeur R1 surveille les entêtes de nouveaux flux provenant du noeud client C1. Le noeud routeur R1 découvre le paramètre de protection et le signale au noud routeur R3, directement ou indirectement via un contrôleur de routeurs du réseau opérateur N2.

Dans un mode de réalisation, après avoir reçu le paramètre de protection, le noeud routeur R3 le communique aux noeuds routeurs qui lui sont immédiatement voisins, c'est-à-dire les noeuds routeurs R2 et R4. En effet tous les flux destinés au noeud client C3 passent obligatoirement par un des noeuds routeurs immédiatement en amont du noeud routeur R3. Ainsi, la charge de filtrer les flux destinés au noeud client C3 est répartie sur plusieurs noeuds routeurs plutôt que sur un seul.

Dans un mode de réalisation, la communication du paramètre de protection vers un noeud routeur amont peut être déclenchée par un noeud routeur aval lorsque le volume de flux reçus par ce routeur atteint un seuil mettant en danger le noeud aval ou le lien entre le noeud routeur amont et le noeud routeur aval. Ainsi, le noeud routeur R3 se protège en déléguant la charge du filtrage au noeud routeur R4, ce qui se trouve utile car c'est par ce noeud que transite le flux F2.

Dans un mode de réalisation, le noeud routeur R4 peut lui aussi communiquer le code de protection vers un noeud routeur amont (non illustré dans la figure 1), de façon récursive. Le seuil de déclenchement de cette communication peut être fonction des capacités du noeud routeur R4 et être différent de celui du noeud routeur R3. On comprend qu'il est ainsi possible de remonter la charge de filtrer le flux F2 jusqu'au premier noeud routeur emprunté par le flux F2 dans le réseau N2. L'identification et la localisation de la source A1 peut ainsi être facilitée et l'ensemble du réseau N2 est alors dispensé de transporter le flux F2 qui non seulement est de volume important, mais est destiné à être détruit.

En plus d'être communiqué au réseau de transport N2, le paramètre de protection est également inséré dans un ou plusieurs champs des paquets du F1 avant leur émission par le noeud client C1. Dans le cas le plus simple, le paramètre de protection est inséré dans un seul champ d'un paquet, mais dans une variante de réalisation il peut être constitué de plusieurs parties qui sont réparties dans plusieurs champs d'un paquet.

Dans un mode de réalisation, le paramètre de protection est inclus dans l'adresse IPv6 de destination des paquets du flux F1, par exemple dans les 64 dernier bits de l'adresse IPv6.

Dans un mode de réalisation, le flux F1 est un tunnel IPsec et le paramètre de protection est compris dans le champ SPI (Security Parameters Index). L'avantage du champ SPI est qu'il est un champ spécifique aux tunnels IPsec, et que sa valeur peut être modifiée au besoin sans impacter le routage du flux.

Dans un mode de réalisation, le flux F1 est un tunnel IPsec et le paramètre de protection est réparti sur plusieurs champs, dont fait partie le champ SPI de préférence. Les autres champs utilisables sont : le champ Protocol (ou le champ Next Header dans le cas IPv6), le champ adresse IP source, le champ adresse IP destination, le champ port source, le champ port destination. Aussi utilisables sont certains champs de SRv6 (Segment Routing IPv6, RFC 8754), tels que par exemple Segment List, Segment List [n], Tag, HMAC TLV.

Dans un mode de réalisation où le flux n'est pas un tunnel IPsec, le champ SPI ne peut pas être utilisé mais les autres champs qui viennent d'être mentionnés sont utilisables. Le champ Key de GRE (Generic Routing Encapsulation) est aussi utilisable. D'autres champs spécifiques aux paquets IPv6 peuvent aussi être utilisés, tels que Routing Header, Destination option, ou Authentication Header.

Par sécurité et particulièrement en IPv4, il peut être préférable de répartir le paramètre de protection sur plusieurs champs dont au moins le champ Protocol, car les autres champs (adresses IP et ports) sont plus facilement découvrables par un attaquant.

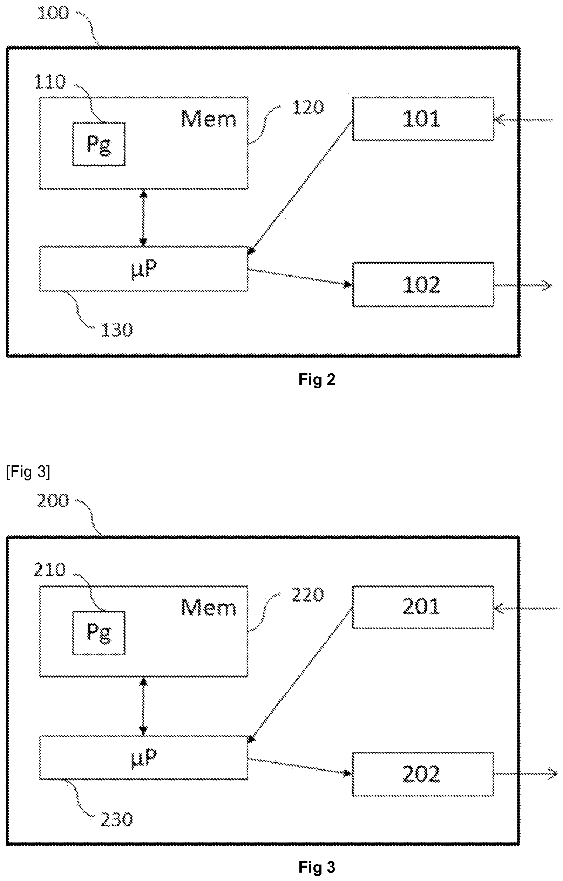

En relation avec la figure 2, on présente maintenant un exemple de structure d'un dispositif de protection d'un flux de paquets, selon un aspect de l'invention.

Le dispositif 100 de protection met en oeuvre le procédé de protection d'un flux de paquets, dont différents modes de réalisation viennent d'être décrits.

Un tel dispositif 100 peut être mis en oeuvre dans un noeud émetteur ou récepteur du flux, ou dans un contrôleur de communication des flux clients (par exemple un contrôleur SD-WAN).

Par exemple, le dispositif 100 comprend un récepteur 101, un émetteur 102, une unité de traitement 130, équipée par exemple d'un microprocesseur µP, et pilotée par un programme d'ordinateur 110, stocké dans une mémoire 120 et mettant en oeuvre le procédé de protection selon l'invention. A l'initialisation, les instructions de code du programme d'ordinateur 110 sont par exemple chargées dans une mémoire RAM, avant d'être exécutées par le processeur de l'unité de traitement 130.

Une telle mémoire 120, un tel processeur de l'unité de traitement 130, un tel récepteur 101 et un tel émetteur 102 sont aptes à, et configurés pour :
- l'émission d'un message comprenant la valeur attendue du paramètre de protection, à destination du noeud routeur connecté au noeud récepteur ou destinataire du flux.

Avantageusement, ils sont également aptes à, et configurés pour :
- la réémission d'un nouveau message avec une nouvelle valeur du paramètre de protection, après expiration d'une période définie.

En relation avec la figure 3, on présente maintenant un exemple de structure d'un dispositif de filtrage d'un flux de paquets, selon un aspect de l'invention.

Le dispositif 200 de filtrage met en oeuvre le procédé de filtrage d'un flux de paquets, dont différents modes de réalisation viennent d'être décrits.

Un tel dispositif 200 peut être mis en oeuvre dans un noeud routeur de flux de paquets, par exemple le noeud routeur connecté à un noeud client destinataire des flux.

Par exemple, le dispositif 200 comprend un récepteur 201, un émetteur 202, une unité de traitement 230, équipée par exemple d'un microprocesseur µP, et pilotée par un programme d'ordinateur 210, stocké dans une mémoire 220 et mettant en oeuvre le procédé de filtrage d'un flux de paquets selon l'invention. A l'initialisation, les instructions de code du programme d'ordinateur 210 sont par exemple chargées dans une mémoire RAM, avant d'être exécutées par le processeur de l'unité de traitement 230.

Une telle mémoire 220, un tel processeur de l'unité de traitement 230, un tel récepteur 201 et un tel émetteur 202 sont aptes à, et configurés pour :
- la réception d'un message comprenant la valeur attendue du paramètre de protection, en provenance d'un dispositif associé au noeud récepteur,
- le filtrage des paquets ne comprenant pas la valeur attendue du paramètre de protection.

Avantageusement, ils sont également aptes à, et configurés pour :
- l'émission du message comprenant la valeur attendue du paramètre de protection, vers un noeud routeur voisin.

Les entités décrites et comprises dans les dispositifs décrits en relation avec les figures 2 et 3 peuvent être matérielles ou logicielles. Les figures 2 et 3 illustrent seulement une manière particulière, parmi plusieurs possibles, de réaliser l'algorithme détaillé ci-dessus, en relation avec la figure 1. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une clé USB, une disquette, un CD-ROM ou un DVD-ROM) ou non, ce médium de stockage étant lisible partiellement ou totalement par un ordinateur ou un processeur.

## Revendications

1. **Procédé** de protection d'un flux (F1) de paquets dans un réseau (N1) composé de noeuds (R1-R4) routeurs de paquets, et de noeuds (C1-C3) émetteur et récepteur du flux, le noeud récepteur (C3) étant connecté à un noeud routeur (R3) traitant le routage d'un paquet à destination du noeud récepteur en fonction d'une valeur attendue d'un paramètre de protection compris dans au moins un champ d'un paquet du flux, le procédé étant mis en oeuvre par un dispositif associé au noeud récepteur (C3) et comprenant :
• l'émission d'un message comprenant la valeur attendue du paramètre de protection, à destination du noeud routeur (R3) connecté au noeud récepteur (C3).

2. **Procédé** de protection selon la revendication précédente, où l'émission du message comprenant la valeur attendue du paramètre de protection est déclenchée par l'obtention d'une information indicative d'une congestion entre le noeud émetteur (C1) et le noeud récepteur (C3).

3. **Procédé** de protection selon l'une des revendications précédentes, où un nouveau message est réémis avec une nouvelle valeur du paramètre de protection, après expiration d'une période définie.

4. **Procédé** de protection selon l'une des revendications précédentes, où le message comprend plusieurs valeurs attendues du paramètre de protection, chaque valeur correspondant à une période différente d'utilisation.

5. **Procédé** de filtrage d'un flux (F2) de paquets dans un réseau composé de noeuds routeurs (R1-R4) de paquets, et de noeuds (C1-C3) émetteur et récepteur du flux, le noeud récepteur (C3) étant connecté à un noeud routeur (R3) traitant le routage d'un paquet à destination du noeud récepteur en fonction d'une valeur attendue d'un paramètre de protection compris dans au moins un champ d'un paquet du flux, le procédé étant mis en oeuvre par le noeud routeur (R3) connecté au noeud récepteur (C3) et comprenant :
• la réception d'un message comprenant la valeur attendue du paramètre de protection, en provenance d'un dispositif associé au noeud récepteur (C3),
• le filtrage des paquets ne comprenant pas la valeur attendue du paramètre de protection.

6. **Procédé** de filtrage selon la revendication précédente, où le filtrage comprend un blocage des paquets, ou une destruction des paquets, ou un abaissement de la priorité des paquets.

7. **Procédé** de filtrage selon l'une des revendications 5 ou 6, comprenant en outre l'émission du message comprenant la valeur attendue du paramètre de protection, vers un noeud routeur voisin (R2, R4) du noeud routeur (R3) connecté au noeud récepteur (C3).

8. **Procédé** selon l'une des revendications précédentes, où le paramètre de protection est inclus dans l'adresse IPv6 de destination des paquets du flux (F1).

9. **Procédé** selon l'une des revendications précédentes, où le flux (F1) est un tunnel IPsec ou un tunnel IP.

10. **Procédé** selon l'une des revendications précédentes, où l'au moins un champ comprenant le paramètre de protection est un ou plusieurs des champs d'une liste comprenant:
• "Security Parameters Index" (SPI) de IPsec,
• "Protocol" de IPv4,
• "Next Header" de IPv6,
• "Flow Label" de IPv6,
• adresse IP source, ou adresse IP destination, ou port source, ou port destination, de IPv4 ou IPv6.
• "Key" de GRE,
• Segment List, ou Segment List [n], ou Tag, ou HMAC TLV de Segment Routing IPv6 (SRv6).

11. **Procédé** selon l'une des revendications précédentes, où le message comprenant la valeur attendue du paramètre de protection est un message d'un des protocoles suivants:
• BGP Flow Spec,
• NETCONF,
• RESTCONF,
• En ligne de commande (CLI: Command Line Interface),
• SNMP,
• API REST,
• API.

12. **Dispositif** (100) de protection d'un flux (F1) de paquets dans un réseau (N1) composé de noeuds (R1-R4) routeurs de paquets, et de noeuds (C1-C3) émetteur et récepteur du flux, le noeud récepteur (C3) étant connecté à un noeud routeur (R3) traitant le routage d'un paquet à destination du noeud récepteur en fonction d'une valeur attendue d'un paramètre de protection compris dans au moins un champ d'un paquet du flux, le dispositif étant associé au noeud récepteur (C3) et comprenant un récepteur (101), un émetteur (102), un processeur (130) et une mémoire (120) couplée au processeur avec des instructions destinées à être exécutées par le processeur pour :
• l'émission d'un message comprenant la valeur attendue du paramètre de protection, à destination du noeud routeur (R3) connecté au noeud récepteur (C3).

13. **Dispositif** (200) de filtrage d'un flux (F2) de paquets dans un réseau (N1) composé de noeuds (R1-R4) routeurs de paquets, et de noeuds (C1-C3) émetteur et récepteur du flux, le noeud récepteur (C3) étant connecté à un noeud routeur (R3) traitant le routage d'un paquet à destination du noeud récepteur en fonction d'une valeur attendue d'un paramètre de protection compris dans au moins un champ d'un paquet du flux, le dispositif étant mis en oeuvre dans le noeud routeur (R3) connecté au noeud récepteur (C3) et comprenant un récepteur (201), un émetteur (202), un processeur (230) et une mémoire (220) couplée au processeur avec des instructions destinées à être exécutées par le processeur pour :
• la réception d'un message comprenant la valeur attendue du paramètre de protection, en provenance d'un dispositif (100) associé au noeud récepteur (C3),
• le filtrage des paquets ne comprenant pas la valeur attendue du paramètre de protection.

14. **Programme d'ordinateur** (110, 210), comprenant des instructions qui, lorsque ces instructions sont exécutées par un processeur, conduisent celui-ci à mettre en oeuvre les étapes du procédé de protection selon la revendication 1 ou les étapes du procédé de filtrage selon la revendication 5.

15. **Support d'informations** lisible par un dispositif de protection (100) ou par un dispositif de filtrage (200), et comportant des instructions d'un programme d'ordinateur (110, 210) conforme à la revendication 14.

## Patentansprüche

1. Verfahren zum Schutz eines Flusses (F1) von Paketen in einem Netzwerk (N1), das aus Knoten (R1-R4), die Pakete routen, und Knoten (C1-C3), die den Fluss senden und empfangen, besteht, wobei der Empfangsknoten (C3) mit einem Routerknoten (R3) verbunden ist, der das Routen eines Pakets an den Empfangsknoten in Abhängigkeit von einem erwarteten Wert eines Schutzparameters, der in mindestens einem Feld eines Pakets des Flusses enthalten ist, verarbeitet, wobei das Verfahren von einer Vorrichtung implementiert wird, die dem Empfangsknoten (C3) zugeordnet ist und enthält:
• Senden einer Nachricht, die den erwarteten Wert des Schutzparameters enthält, an den Routerknoten (R3), der mit dem Empfängerknoten (C3) verbunden ist.

2. Schutzverfahren nach dem vorhergehenden Anspruch, wobei das Senden der Nachricht, die den erwarteten Wert des Schutzparameters enthält, durch den Erhalt einer Information ausgelöst wird, die auf eine Überlastung zwischen dem Sendeknoten (C1) und dem Empfängerknoten (C3) hinweist.

3. Schutzverfahren nach einem der vorhergehenden Ansprüche, wobei eine neue Nachricht mit einem neuen Wert des Schutzparameters nach Ablauf eines festgelegten Zeitraums erneut gesendet wird.

4. Schutzverfahren nach einem der vorhergehenden Ansprüche, wobei die Nachricht mehrere erwartete Werte des Schutzparameters enthält, wobei jeder Wert einem anderen Nutzungszeitraum entspricht.

5. Verfahren zum Filtern eines Flusses (F2) von Paketen in einem Netzwerk, das aus Knoten (R1-R4), die Pakete routen, und Knoten (C1-C3), die den Fluss senden und empfangen, besteht, wobei der Empfängerknoten (C3) mit einem Routerknoten (R3) verbunden ist, der das Routen eines Pakets an den Empfängerknoten in Abhängigkeit von einem erwarteten Wert eines Schutzparameters verarbeitet, der in mindestens einem Feld eines Pakets des Flusses enthalten ist, wobei das Verfahren von dem mit dem Empfängerknoten (C3) verbundenen Routerknoten (R3) implementiert wird und enthält:
• Empfang einer Nachricht, die den erwarteten Wert des Schutzparameters enthält, von einer Vorrichtung, die dem Empfängerknoten (C3) zugeordnet ist,
• Filtern von Paketen, die den erwarteten Wert des Schutzparameters nicht enthalten.

6. Filterverfahren nach dem vorhergehenden Anspruch, wobei das Filtern ein Blockieren von Paketen oder eine Vernichtung von Paketen oder eine Herabsetzung der Priorität von Paketen enthält.

7. Filterverfahren nach einem der Ansprüche 5 oder 6, das außerdem das Senden der Nachricht, die den erwarteten Wert des Schutzparameters enthält, an einen benachbarten Routerknoten (R2, R4) des Routerknotens (R3), der mit dem Empfängerknoten (C3) verbunden ist, enthält.

8. Verfahren nach einem der vorhergehenden Ansprüche, wobei der Schutzparameter in der IPv6 - Zieladresse der Pakete des Flusses (F1) enthalten ist.

9. Verfahren nach einem der vorhergehenden Ansprüche, wobei der Fluss (F1) ein IPsec-Tunnel oder ein IP-Tunnel ist.

10. Verfahren nach einem der vorhergehenden Ansprüche, wobei das mindestens eine Feld, das den Schutzparameter enthält, eines oder mehrere der Felder einer Liste ist, enthaltend:
• "Security Parameters Index" (SPI) von IPsec,
• "Protocol" aus IPv4,
• "Next Header" aus IPv6,
• "Flow Label" aus IPv6,
• Quell-IP-Adresse oder Ziel-IP-Adresse oder Quell-Port oder Ziel-Port aus IPv4 oder IPv6.
• "Key" aus GRE,
• Segment List oder Segment List [n] oder Tag oder HMAC TLV aus IPv6 Segment Routing (SRv6).

11. Verfahren nach einem der vorhergehenden Ansprüche, wobei die Nachricht, die den erwarteten Wert des Schutzparameters enthält, eine Nachricht eines der folgenden Protokolle ist:
• BGP Flow Spec,
• NETCONF,
• RESTCONF,
• In der Kommandozeile (CLI: Command Line Interface),
• SNMP,
• API REST,
• API.

12. Vorrichtung (100) zum Schutz eines Flusses (F1) von Paketen in einem Netzwerk (N1), das aus Knoten (R1-R4), die Pakete routen, und Knoten (C1-C3), die den Fluss senden und empfangen, besteht, wobei der Empfangsknoten (C3) mit einem Routerknoten (R3) verbunden ist, der das Routen eines Pakets an den Empfangsknoten in Abhängigkeit von einem erwarteten Wert eines Schutzparameters verarbeitet, der in mindestens einem Feld eines Pakets des Flusses enthalten ist, wobei die Vorrichtung dem Empfängerknoten (C3) zugeordnet ist und einen Empfänger (101), einen Sender (102), einen Prozessor (130) und einen Speicher (120) enthält, der mit dem Prozessor mit Befehlen gekoppelt ist, die dazu bestimmt sind, vom Prozessor ausgeführt zu werden, zum:
• Senden einer Nachricht, die den erwarteten Wert des Schutzparameters enthält, an den Routerknoten (R3), der mit dem Empfängerknoten (C3) verbunden ist.

13. Vorrichtung (200) zum Filtern eines Flusses (F2) von Paketen in einem Netzwerk (N1), das aus Knoten (R1-R4), die Pakete routen, und Knoten (C1-C3), die den Fluss senden und empfangen, besteht, wobei der Empfangsknoten (C3) mit einem Routerknoten (R3) verbunden ist, der das Routen eines Pakets an den Empfangsknoten in Abhängigkeit von einem erwarteten Wert eines Schutzparameters, der in mindestens einem Feld eines Pakets des Flusses enthalten ist, verarbeitet, wobei die Vorrichtung in dem Routerknoten (R3) implementiert ist, der mit dem Empfängerknoten (C3) verbunden ist und einen Empfänger (201), einen Sender (202), einen Prozessor (230) und einen Speicher (220) enthält, der mit dem Prozessor mit Befehlen gekoppelt ist, die dazu bestimmt sind, vom Prozessor ausgeführt zu werden, zum:
• Empfang einer Nachricht, die den erwarteten Wert des Schutzparameters enthält, von einer Vorrichtung (100), die dem Empfängerknoten (C3) zugeordnet ist,
• Filtern von Paketen, die den erwarteten Wert des Schutzparameters nicht enthalten.

14. Computerprogramm (110, 210), das Befehle enthält, die, wenn diese Befehle von einem Prozessor ausgeführt werden, diesen dazu veranlassen, die Schritte des Schutzverfahrens nach Anspruch 1 oder die Schritte des Filterverfahrens nach Anspruch 5 zu implementieren.

15. Informationsträger, der von einer Schutzvorrichtung (100) oder von einer Filtervorrichtung (200) gelesen werden kann und Befehle eines Computerprogramms (110, 210) nach Anspruch 14 enthält.

## Claims

1. Method for protecting a packet flow (F1) in a network (N1) composed of router nodes (R1-R4) routing packets and of transmitter and receiver nodes (C1-C3) transmitting and receiving the flow, the receiver node (C3) being connected to a router node (R3) processing the routing of a packet destined for the receiver node on the basis of an expected value of a protection parameter contained in at least one field of a packet of the flow, the method being implemented by a device associated with the receiver node (C3) and comprising:
• transmitting a message comprising the expected value of the protection parameter, destined for the router node (R3) connected to the receiver node (C3).

2. Protection method according to the preceding claim, wherein the transmission of the message comprising the expected value of the protection parameter is triggered by obtaining information indicative of congestion between the transmitter node (C1) and the receiver node (C3).

3. Protection method according to either of the preceding claims, wherein a new message is retransmitted with a new value of the protection parameter after a defined period has expired.

4. Protection method according to one of the preceding claims, wherein the message comprises multiple expected values of the protection parameter, each value corresponding to a different period of use.

5. Method for filtering a packet flow (F2) in a network composed of router nodes (R1-R4) routing packets and of transmitter and receiver nodes (C1-C3) transmitting and receiving the flow, the receiver node (C3) being connected to a router node (R3) processing the routing of a packet destined for the receiver node on the basis of an expected value of a protection parameter contained in at least one field of a packet of the flow, the method being implemented by the router node (R3) connected to the receiver node (C3) and comprising:
• receiving a message comprising the expected value of the protection parameter, from a device associated with the receiver node (C3),
• filtering packets not comprising the expected value of the protection parameter.

6. Filtering method according to the preceding claim, wherein the filtering comprises blocking the packets, or destroying the packets, or lowering the priority of the packets.

7. Filtering method according to either of Claims 5 and 6, furthermore comprising transmitting the message comprising the expected value of the protection parameter to a router node (R2, R4) neighboring the router node (R3) connected to the receiver node (C3).

8. Method according to one of the preceding claims, wherein the protection parameter is contained in the destination IPv6 address of the packets of the flow (F1).

9. Method according to one of the preceding claims, wherein the flow (F1) is an IPsec tunnel or an IP tunnel.

10. Method according to one of the preceding claims, wherein the at least one field comprising the protection parameter is one or more of the fields from a list comprising:
• "Security Parameters Index" (SPI) of IPsec,
• "Protocol" of IPv4,
• "Next Header" of IPv6,
• "Flow Label" of IPv6,
• source IP address, or destination IP address, or source port, or destination port, of IPv4 or IPv6,
• "Key" of GRE,
• Segment List, or Segment List [n], or Tag, or HMAC TLV of Segment Routing IPv6 (SRv6).

11. Method according to one of the preceding claims, wherein the message comprising the expected value of the protection parameter is a message of one of the following protocols:
• BGP Flow Spec,
• NETCONF,
• RESTCONF,
• Command line interface (CLI),
• SNMP,
• API REST,
• API.

12. Device (100) for protecting a packet flow (F1) in a network (N1) composed of router nodes (R1-R4) routing packets and of transmitter and receiver nodes (C1-C3) transmitting and receiving the flow, the receiver node (C3) being connected to a router node (R3) processing the routing of a packet destined for the receiver node on the basis of an expected value of a protection parameter contained in at least one field of a packet of the flow, the device being associated with the receiver node (C3) and comprising a receiver (101), a transmitter (102), a processor (130) and a memory (120) coupled to the processor with instructions intended to be executed by the processor for the purpose of:
• transmitting a message comprising the expected value of the protection parameter, destined for the router node (R3) connected to the receiver node (C3).

13. Device (200) for filtering a packet flow (F2) in a network (N1) composed of router nodes (R1-R4) routing packets and of transmitter and receiver nodes (C1-C3) transmitting and receiving the flow, the receiver node (C3) being connected to a router node (R3) processing the routing of a packet destined for the receiver node on the basis of an expected value of a protection parameter contained in at least one field of a packet of the flow, the device being implemented in the router node (R3) connected to the receiver node (C3) and comprising a receiver (201), a transmitter (202), a processor (230) and a memory (220) coupled to the processor with instructions intended to be executed by the processor for the purpose of:
• receiving a message comprising the expected value of the protection parameter, from a device (100) associated with the receiver node (C3),
• filtering packets not comprising the expected value of the protection parameter.

14. Computer program (110, 210), comprising instructions that, when these instructions are executed by a processor, prompt said processor to implement the steps of the protection method according to Claim 1 or the steps of the filtering method according to Claim 5.

15. Information medium able to be read by a protection device (100) or by a filtering device (200) and comprising instructions of a computer program (110, 210) according to Claim 14.
